# EUROPÄISCHE PATENTSCHRIFT

(11) **EP 1 044 848 B1**
(45) Veröffentlichungstag und Bekanntmachung des Hinweises auf die Patenterteilung: **14.05.2003**
(21) Anmeldenummer: 00108348.4
(22) Anmeldetag: 14.04.2000
(51) Int. Cl.: B60R 3/02

(54) **Heckeinstiegauftritt für ein Strassentransportfahrzeug**
Rear foot step for a road handling vehicle
Marchepied arrière pour un véhicule de transport routier

(30) Priorität: 15.04.1999 DE 29906681 U
(43) Veröffentlichungstag der Anmeldung: 18.10.2000
(73) Patentinhaber: Wirth, Michael, 86476 Wattenweiler (DE)
(72) Erfinder: Wirth, Michael, 86476 Wattenweiler (DE)
(74) Vertreter: Binder, Armin

(56) Entgegenhaltungen:
- EP-A- 0 919 435
- GB-A- 1 541 411
- US-A- 2 145 647
- US-A- 3 341 223
- US-A- 3 671 058
- US-A- 3 883 844
- US-A- 5 342 073

## Beschreibung

Die Erfindung betrifft einen Heckeinstiegauftritt für ein Straßentransportfahrzeug, insbesondere einen Kastenwagen, mit einer quer zur Fahrtrichtung, im Bereich des Heckeinstiegs verlaufenden Trittplatte, wobei die Trittplatte über mindestens einen Träger mit dem Fahrzeug verbunden ist.

Bei Straßentransportfahrzeugen besteht grundsätzlich das Problem, daß die Ladefläche der Transportfahrzeuge, aufgrund der darunter angeordneten Achsen und Räder des Kraftfahrzeuges, beziehungsweise teilweise auch des darunter angeordneten Motors, gegenüber der Straßenebene einen relativ hohen Abstand aufweist. Eine bekannte Lösung des Problems der hohen Ladefläche wird dadurch erreicht, daß die Straßentransportfahrzeuge über eine Rampe be- und entladen werden. Allerdings werden spezielle Vorrichtungen notwendig, sobald die Straßentransportfahrzeuge als Zulieferfahrzeuge eingesetzt werden und für das Ein- und Ausladen keine besonderen Be- und Entladerampen vorhanden sind. Bei größeren LKW's wird dieses Problem zum Teil auch dadurch gelöst, daß die LKW's über hydraulisch bewegbare Heckklappen verfügen, die gleichermaßen als Aufzug für die zu ladenden Frachten dienen können. Bei kleineren Fahrzeugen ist diese aufwendige und kostenintensive Mechanik nicht einsetzbar, da sie in Relation zum Gesamtfahrzeugpreis zu teuer ist.

Aus diesem Grund wird versucht, dieses Problem mit einfachen Mitteln über einen Heckeinstiegauftritt zu lösen, der ohne hydraulische Systeme auskommt.

Es wird beispielhaft auf die oberbegriffbildende, europäische Patentanmeldung EPA 042 14 07 hingewiesen. Diese Patentanmeldung offenbart einen Heckeinstiegauftritt für Kraftfahrzeuge, mit einer unter der Kraftfahrzeug-Chassis angeordneten, das Kraftfahrzeug nach hinten überragenden, querliegenden Trittplatte, die mittels am Kraftfahrzeug-Chassis befestigter Federn, um einen beschränkten Bereich im wesentlichen horizontal elastisch verschieblich gehalten ist, wobei die Trittplatte auf Tragrahmen festgelegt ist, an denen die einen Enden von Blattfedern befestigt sind und wobei die Blattfedern sich vom Kraftfahrzeug-Chassis aus bis zur Befestigung am Tragrahmen nach unten erstrecken.

Diese Art eines Heckeinstiegauftritts hat den Vorteil, daß beim Zurücksetzen des Fahrzeuges und Anstoßen gegen ein Hindernis die Auftrittsfläche diesem Hindernis ausweichen kann, indem sie durch die Feder nach unten in Richtung Chassis ausschwenkt und dadurch eine Beschädigung der Trittplatte und deren Aufhängung vermieden wird.

Der Nachteil besteht allerdings darin, daß die Trittplatte grundsätzlich nach hinten weit über das Fahrzeug übersteht und damit beim Hängerbetrieb Probleme verursacht. Der Wendekreis ist durch das Ausladen der Trittplatte nach hinten gegenüber dem Fahrzeuganhänger wesentlich reduziert. Weiterhin wird die Gesamtlänge des Fahrzeuges vergrößert, wodurch das Abstellen des Fahrzeuges in beengten Plätzen Probleme bereitet.

Eine Problemlösung hierfür zeigt die Britische Patentanmeldung GB 22 48 814 mit einer Aufstiegsplatte, die auf eine, am Heck des Fahrzeuges angebrachte Anhängerkupplung bei Bedarf aufgeschraubt und nach der Benutzung wieder abgenommen werden kann.

Hierdurch wird zwar erreicht, daß bei der Nichtbenutzung der Heckeinstiegauftrittsplatte die ursprüngliche Größe des Kraftfahrzeuges nicht verändert wird und auch keine Bewegungseinschränkung für eventuell an der Anhängerkupplung hängende Anhänger besteht. Jedoch ist das Handling sehr aufwendig und es wird für die Platte zusätzlich ein Stauraum benötigt, in dem sie bei Nichtbedarf untergebracht werden kann.

Eine andere Lösung wird in der Deutschen Patentanmeldung DE 39 15 387 vorgeschlagen. Diese Schrift offenbart ein Kraftfahrzeug, mit einer im wesentlichen oberhalb eines querverlaufenden Stoßfängers angeordneten Hecktür, wobei der Stoßfänger zumindest bereichsweise zur Bildung einer Trittstufe aus einer im Fahrbetrieb eingenommenen Normalstellung um eine querverlaufende Schwenkachse in eine weitere Position schwenkbar ist, in der er unter Bildung der Trittstufe über den Fahrzeugumriß heckseitig hinausragt.

Diese Lösung ermöglicht zwar grundsätzlich einen Heckeinstieg in das Fahrzeug über eine Trittstufe, jedoch ist die Dimension einer derartigen Einstiegsauftrittsstufe durch die Höhe des Stoßfängers begrenzt, was dazu führt, daß die Stufe nicht breit genug ausgeführt werden kann, um einen bequemen und sicheren Auftritt zu gewährleisten. Andererseits ist naturgemäß eine derartige Lösung bei Fahrzeugen, die aufgrund ihrer hinten angeordneten Hecktüre in diesem Bereich über keinen Stoßfänger verfügen, nicht möglich.

Es ist daher Aufgabe der Erfindung einen Heckeinstiegauftritt gemäß dem Oberbegriff des Anspruches 1 dahingehend zu verbessern, daß eine verbesserte Handhabung während des Betriebes möglich ist, die Trittstufe großzügig dimensioniert werden kann und außerdem im nicht benutzten Zustand der Auftritt die Größe des Fahrzeuges im Heckbereich nicht wesentlich verändert.

Die Aufgabe wird durch die Merkmale des Anspruches 1 gelöst.

Demgemäß wird vorgeschlagen, den Heckeinstiegauftritt entsprechend dem Oberbegriff des Anspruches 1 dahingehend zu verbessern, daß die Halterung ein Federelement und mindestens einen Dorn aufweist, wobei der Träger mindestens eine, dem Federelement gegenüberliegende, Positionierungsaussparung aufweist, in den der mindestens eine Dorn eingreifen kann.

Durch diese Ausführung ist es nun möglich, den Heckeinstiegauftritt manuell ein- und auszuziehen, so daß im Bedarfsfall ein ausreichend großer Auftritt für das Be- und Entladen des Fahrzeuges zur Verfügung steht, und nach dem Gebrauch der Heckeinstiegauftritt auf einfache und schnelle Weise eingeschoben werden kann, so daß kein wesentlicher Überstand über das Fahrzeug besteht. Durch diese Art der Ausführung ist es möglich auch im Hängerbetrieb einen derartigen Heckeinstiegauftritt mitzuführen, wobei keine Einschränkung bezüglich der Beweglichkeit und Handhabung mit dem Anhänger besteht.

Eine bevorzugte Ausführung des Heckeinstiegauftrittes besteht darin, daß zwei Träger vorgesehen sind, so daß eine möglichst stabile Auflage des Auftritts gewährleistet ist und keine Torsionsneigung bei seitlichem Auftritt entsteht.

Eine besondere Ausführung des Heckeinstiegauftritts sieht vor, daß die Halterung den Träger umfaßt, wobei vorteilhaft Federelemente zur Sicherung des Trägers gegen ein ungewolltes Ausfahren während der Fahrt vorgesehen sind. Weiterhin können Positionierungsaussparungen, vorzugsweise in Form von Bohrungen, im Träger vorgesehen werden und auf der Gegenseite die Halterung mit einem oder mehreren Dornen versehen werden, die in die Positionierungsaussparung in bestimmten Position eingreifen.

Eine weitere vorteilhafte Ausgestaltung des Heckeinstiegauftritts sieht vor, daß je Träger mindestens zwei Positionieraussparungen und mindestens zwei Dorne, z.B. in Form von eingeschraubten oder angeschweißten Positionierschrauben, vorgesehen sind, die in Schieberichtung des Auftritts gesehen derart versetzt und auf unterschiedlichen Seiten (oben und unten) des Trägers angeordnet sind, daß ein Anheben und Verkippen des Auftritts eine Entriegelung und eine Absenkung des Auftritts ein Eingreifen der Dorne in die Positionieraussparungen bewirkt. Außerdem kann es vorteilhaft sein, wenn mindestens eine Positionieraussparung gegenüber dem Federelement angeordnet ist, so daß das Federelement ein ungewolltes Herausspringen aus der Positionierung verhindert.

Träger und Halterungen werden vorzugsweise aus Rechteckrohren beziehungsweise Vierkanteisen und einem den Träger umgebenden Rechteckrohr hergestellt. Ebenfalls ist es möglich, den Träger als Rundeisen oder Rohr auszuführen und diesen in einer Halterung, die ebenfalls aus einem Rohr hergestellt ist, zu führen.

Die Trittplatte kann bevorzugt aus einem rutschfesten Blech, zum Beispiel einem Riffelblech oder einem Lochblech oder einem Lichtgitter, bestehen, wobei dieses durch einen Rohrrahmen versteift werden kann.

Die Befestigung der Halterung kann beispielsweise am Fahrzeugrahmen direkt stattfinden. Jedoch besteht auch die Möglichkeit die Halterung an der Tragkonstruktion, zum Beispiel an der Quertraverse einer Anhängerkupplung zu befestigen. Außerdem kann es vorteilhaft sein, wenn die Halterung und die Tragkonstruktion der Anhängerkupplung eine Einheit bilden.

Vorteilhaft kann auch die Halterung in die Anhängerkupplung integriert werden, beispielsweise wenn die Quertraverse der Anhängerkupplung entsprechende Öffnungen für die Führung der Träger aufweist.

Da die Trittplatte des Heckeinstiegauftrittes bei der Benutzung über das Fahrzeug hinausragt, ist es besonders vorteilhaft, wenn der Heckeinstiegauftritt mit einem Sensor und/oder mit einem Schalter versehen ist, der einen ersten Schaltungszustand in der eingefahrenen Position des Trittbrettes und einen zweiten Zustand in der ausgefahrenen Position des Trittbrettes aufweist. Hierdurch kann im Fahrzeuginneren die Position des Trittbrettes dargestellt oder ein Freigabesignal ausgelöst werden, sobald das Trittbrett sich im eingefahrenen und gesicherten Zustand befindet. Es ist aber auch möglich, daß in dieser Stellung kein Signal im Fahrzeuginneren erscheint, während die ausgefahrene Position des Trittbrettes im Fahrzeuginneren signalisiert wird.

Eine weitere vorteilhafte Ausgestaltung kann vorsehen, daß im zweiten Zustand, in dem Zustand, indem das Trittbrett ausgefahren ist, die Zündung des Fahrzeuges unterbrochen und/oder eine sonstige Wegfahrsperre im Fahrzeug aktiviert wird.

Diese Schalter beziehungsweise Sensoren verhindern, daß unbeabsichtigt das Fahrzeug in Bewegung gesetzt wird, während der Gepäckeinstiegsauftritt noch ausgefahren ist und damit eventuell beim Rangieren Schäden am Anhänger oder sonstige Gefährdungen entstehen können. Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus den Unteransprüchen und der nachfolgenden Beschreibung eines bevorzugten Ausführungsbeispiels unter Bezugnahme auf die Zeichnungen.

Die Erfindung soll nachfolgend, anhand der Zeichnungen, näher erläutert werden. Es stellen dar:
- Figur 1:: Seitenansicht des Heckeinstiegauftritts;
- Figur 2:: Aufsicht auf den Heckeinstiegauftritts;
- Figur 3:: Querschnitt durch einen Träger mit Halterung und Federelement.

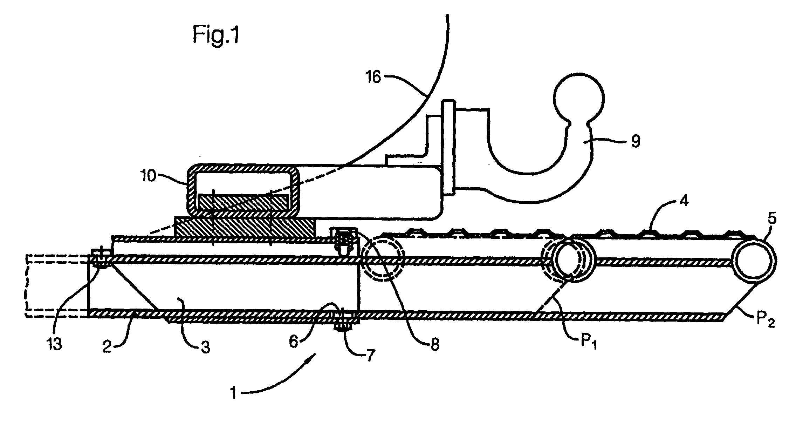

Die Figur 1 zeigt eine Seitenansicht eines erfindungsgemäßen Heckeinstiegauftrittes für ein Straßenfahrzeug, insbesondere für einen Kastenwagen, zum Beispiel einen Lieferwagen, wie er häufig von Handwerkern zur Auslieferung oder auch von Paketdiensten benutzt wird. Die Vorrichtung ist in zwei Positionen P₁ und P₂ dargestellt. Die Position P₁ - gestrichelt gezeichnet - zeigt den Heckeinstiegauftritt in der eingeschobenen Position, während die durchgehend gezeichnete Figur die Position P₂ des Heckeinstiegauftritts im ausgefahrenen Zustand darstellt. Der Heckeinstiegauftritt besteht aus zwei seitlich, unter der eigentlichen Trittplatte angeordneten Trägern 2, die als Rechteckrohre ausgebildet sind und in einer ebenfalls als Rechteckrohr ausgebildeten Halterung 3 verlaufen. Die Rechteckrohre des Trägers 2 weisen auf der Unterseite eine Positionieraussparung in Form einer Bohrung 6 auf, in den Ansprüchen Positionierungssparung genannt, in die in der ausgefahrenen Position eine mit dem Träger 2 verschraubte oder verschweißte Schraube 7, in den Ansprüchen "Dorn" genannt, eingreift und die Position des Trägers festhält. Auf der Oberseite des Trägers 2 ist ein Federelement 8 vorgesehen, das einen elastischen Druck auf den unten liegenden Träger 2 ausübt und ein versehentliches Herausrutschen aus der Positionierung erschwert. Die Halterung 3, die als Rechteckrohr ausgebildet ist, weist an der Vorderseite (in Fahrrichtung) eine Anschrägung auf und ist außerdem wesentlich kürzer, als der Träger 2 selbst. Die Anschrägung ermöglicht ein Anheben des Auftritts auf der Rückseite und ein leichtes Verkippen des Trägers 2 gegenüber der Halterung 3, so daß der Träger aus der Positionierschraube 7 ausscheren und dann in seine Ruheposition geschoben werden kann.

Weiterhin ist in der Seitenansicht eine Anhängerkupplung 9 zu erkennen, die am Fahrzeugrahmen befestigt ist und über eine Quertraverse 10 verfügt, an der die Halterung des Heckeinstiegauftrittes angeklemmt ist.

Die Trittplatte des Heckeinstiegauftritts besteht aus einem Lochblech 4, welches durch einen Rohrrahmen 5 gestützt wird. Der Rohrrahmen selbst ist an den beiden Trägern 2 angeschweißt.

Wie in der Seitenansicht gut zu erkennen ist, kann die Trittplatte problemlos von Hand ausgefahren werden und überragt dann das Fahrzeug an der Heckseite so weit, daß ein bequemer Einstieg in das Fahrzeug ermöglicht ist. Andererseits ist der Auftritt in der Ruheposition P₁ soweit eingeschoben, daß er die Fahrzeuglänge gegenüber der Anhängerkupplung 9 nicht überragt.

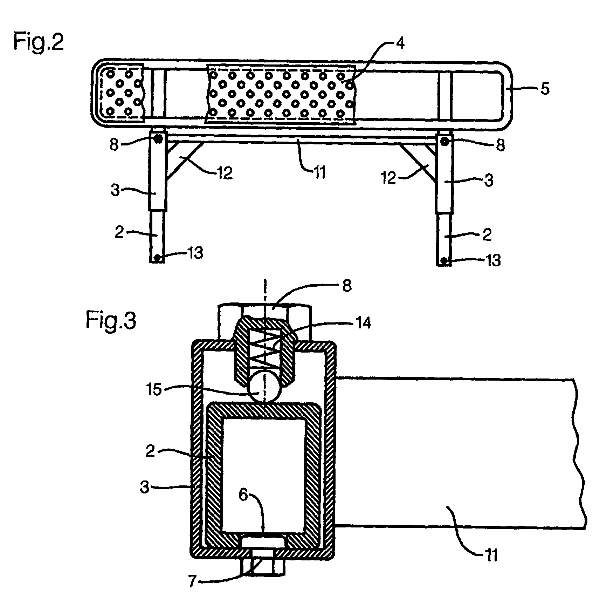

Die Figur 2 zeigt eine Aufsicht der bevorzugten Ausführung des Heckeinstiegauftritts. Es sind die seitlich angeordneten Halterungen 3 zu erkennen, die über eine Quertraverse 11 miteinander verbunden sind und die durch die Bleche 12 versteift sind. Die Träger 2 verlaufen durch die Halterungen 3 und stützen auf ihrem Ende die Auftrittsplatte 4, die als Lochblech dargestellt ist, welche wiederum durch einen Rohrrahmen 5 versteift ist. Die dargestellte Ausführung zeigt die Trittplatte im eingefahrenen Zustand.

Die Figur 3 stellt einen Querschnitt durch die Halterung des Heckeinstiegauftritts dar, wobei der Schnitt durch das Federelement 8 führt. Das Federelement 8 besteht aus einem federnden Druckstück mit Innensechskantschraube, das auf der Innenseite über eine Bohrung verfügt, in der sich eine Spiralfeder 14 befindet, die auf der Unterseite gegen eine beweglich gelagerte Kugel 15 drückt. Die Kugel 15 liegt auf der Oberseite des Trägers 2 und sorgt dafür, daß der Träger 2 mit seiner Öffnung 6 in der eingefahrenen, beziehungsweise in der ausgefahrenen Position, den Schraubenkopf umfaßt und auf diese Weise ein selbständiges Verschieben des Trägers und der Trittplatte verhindert.

### Bezugszeichenliste

- 1: Heckeinstiegauftritts
- 2: Träger
- 3: Halterung
- 4: Auftrittsplatte
- 5: Rohrrahmen
- 6: Öffnung/Bohrung/Positionieraussparung
- 7: Positionierschraube / Dorn
- 8: Federelement
- 9: Anhängerkupplung
- 10: Quertraverse
- 11: Quertraverse
- 12: Knotenblech
- 13: Anschlagsschraube
- 14: Spiralfeder
- 15: Kugel
- 16: Fahrzeug

## Patentansprüche

1. Heckeinstiegauftritt für ein Straßenfahrzeug (16), insbesondere einen sogenannten Kastenwagen, mit einer quer zur Fahrtrichtung, im Bereich des Heckeinstiegs verlaufenden Auftrittsplatte (4), wobei die Auftrittsplatte (4,5) über mindestens einen Träger (2) mit dem Fahrzeug verbunden ist, der mindestens eine Träger (2) in mindestens einer Halterung (3) in Fahrzeugrichtung verschiebbar angeordnet ist, **dadurch gekennzeichnet, daß** die mindestens eine Halterung ein Federelement (8) und mindestens einen Dorn (7) aufweist, wobei der mindestens eine Träger (2) mindestens eine dem Federelement (8) gegenüberliegende Positionierungsaussparung (6) aufweist, in die der mindestens eine Dorn (7) eingreifen kann.

2. Heckeinstiegauftritt gemäß dem voranstehenden Anspruch 1, **dadurch gekennzeichnet, daß** je Träger (2) mindestens zwei Positionieraussparungen (6) und mindestens zwei Dorne (7) vorgesehen sind, die in Schieberichtung des Auftritts gesehen derart versetzt und auf unterschiedlichen Seiten, oben und unten, des Trägers (2) angeordnet sind, so daß ein Anheben und Verkippen des Auftritts eine Entriegelung und eine Absenkung des Auftritts ein Eingreifen der Dorne (7) in die Positionieraussparungen (6) bewirkt.

3. Heckeinstiegauftritt gemäß einem der voranstehenden Ansprüche 1 bis 2, **dadurch gekennzeichnet, daß** die Auftrittplatte (4, 5) aus einem rutschfesten Blech (4) mit einem steifen Rahmen (5) besteht.

4. Heckeinstiegauftritt gemäß einem der voranstehenden Ansprüche 1 bis 3, **dadurch gekennzeichnet, daß** das Federelement (8) eine Schraube mit innenliegender Spiralfeder (14) und federbelasteter Kugel (15) ist.

5. Heckeinstiegauftritt gemäß einem der voranstehenden Ansprüche 1 bis 4, **dadurch gekennzeichnet, daß** ein Sensor und/oder Schalter vorgesehen ist, der mindestens einen ersten Schaltungszustand in der eingefahrenen Position der Auftrittsplatte (4) und einen zweiten Schaltungszustand in der ausgefahrenen Position der Auftrittsplatte (4) aufweist.

6. Heckeinstiegauftritt gemäß dem voranstehenden Anspruch 5, **dadurch gekennzeichnet, daß** im ersten Zustand ein Freigabesignal oder kein Signal im Fahrzeuginneren erscheint beziehungsweise ertönt und/oder im zweiten Zustand die ausgefahrene Position der Auftrittsplatte (4) im Fahrzeuginneren signalisiert wird.

7. Heckeinstiegauftritt gemäß einem der voranstehenden Ansprüche 5 bis 6, **dadurch gekennzeichnet, daß** im zweiten Zustand die Zündung des Fahrzeuges unterbrochen und/oder eine sonstige Wegfahrsperre aktiviert ist.

## Claims

1. Rear entry step for a road vehicle (16), in particular what is known as a box-type van, with a step plate (4) running transversely in relation to the driving direction, in the region of the rear entry, the step plate (4, 5) being connected to the vehicle by means of at least one carrier (2) and the at least one carrier (2) being arranged displaceably the direction of the vehicle in at least one mount (3), **characterized in that** the at least one mount has a spring element (8) and at least one pin (7), the at least one carrier (2) having at least one positioning clearance (6) which lies opposite the spring element (8) and into which the at least one pin (7) can engage.

2. Rear entry step according to the preceding Claim 1, **characterized in that**, for each carrier (2), at least two positioning clearances (6) and at least two pins (7) are provided, which are offset, seen in the sliding direction of the step, and are arranged on different sides, above and below, of the carrier (2) in such a way that raising and tilting of the step brings about unlocking and lowering of the step brings about engagement of the pins (7) into the positioning clearances (6).

3. Rear entry step according to one of the preceding Claims 1 or 2, **characterized in that** the step plate (4, 5) comprises a non-slip metal plate (4) with a rigid frame (5).

4. Rear entry step according to one of the preceding Claims 1 to 3, **characterized in that** the spring element (8) is a screw with an internal helical spring (14) and a spring-loaded ball (15).

5. Rear entry step according to one of the preceding Claims 1 to 4, **characterized in that** a sensor and/or switch is provided, which has at least a first switching state in the moved-in position of the step plate (4) and a second switching state in the moved-out position of the step plate (4).

6. Rear entry step according to the preceding Claim 5, **characterized in that**, in the first state, a release signal or no signal appears or sounds in the interior of the vehicle and/or, in the second state, the moved-out position of the step plate (4) is signalled in the interior of the vehicle.

7. Rear entry step according to one of the preceding Claims 5 or 6, **characterized in that**, in the second state, the ignition of the vehicle is interrupted and/or some other immobilizer is activated.

## Revendications

1. Marchepied arrière pour un véhicule de transport routier (16), en particulier une camionnette, comprenant une plaque de marchepied (4) s'étendant transversalement à la direction d'avance, dans la région de l'entrée arrière, la plaque de marchepied (4, 5) étant connectée au véhicule par le biais d'au moins un support (2), l'au moins un support (2) étant disposé de manière déplaçable dans la direction du véhicule dans au moins une fixation (3), **caractérisé en ce que** l'au moins une fixation présente un élément à ressort (8) et au moins un mandrin (7), l'au moins un support (2) présentant au moins un évidement de positionnement (6) opposé à l'élément à ressort (8), dans lequel l'au moins un mandrin (7) peut venir en prise.

2. Marchepied arrière selon la revendication précédente 1, **caractérisé en ce que** pour chaque support (2), on prévoit au moins deux évidements de positionnement (6) et au moins deux mandrins (7), qui, vus dans la direction de poussée du marchepied, sont décalés et disposés sur des côtés différents haut et bas du support (2) de telle sorte qu'un soulèvement et un basculement du marchepied provoque un déverrouillage et qu'un abaissement du marchepied provoque un engagement du mandrin (7) dans les évidements de positionnement (6).

3. Marchepied arrière selon l'une quelconque des revendications précédentes 1 à 2, **caractérisé en ce que** la plaque de marchepied (4, 5) se compose d'une tôle antidérapante (4) avec un cadre rigide (5).

4. Marchepied arrière selon l'une quelconque des revendications précédentes 1 à 3, **caractérisé en ce que** l'élément à ressort (8) est une vis avec un ressort spiral intérieur (14) et une bille sollicitée par ressort (15).

5. Marchepied arrière selon l'une quelconque des revendications précédentes 1 à 4, **caractérisé en ce qu'**il est prévu un capteur et/ou un commutateur, qui présente au moins un premier état de commutation dans la position rentrée de la plaque de marchepied (4) et un deuxième état de commutation dans la position déployée de la plaque de marchepied (4).

6. Marchepied arrière selon la revendication précédente 5, **caractérisé en ce que** dans le premier état, un signal de déclenchement ou aucun signal n'apparaît ou ne retentit à l'intérieur du véhicule, et/ou dans le deuxième état, la position déployée de la plaque de marchepied (4) est signalée à l'intérieur du véhicule.

7. Marchepied arrière selon l'une quelconque des revendications précédentes 5 à 6, **caractérisé en ce que** dans le deuxième état, l'allumage du véhicule est interrompu et/ou un autre blocage du démarrage est activé.
